# EUROPEAN PATENT SPECIFICATION

(11) **EP 1 349 657 B1**
(45) Date of publication and mention of the grant of the patent: **22.08.2007**
(21) Application number: 02801479.3
(22) Date of filing: 12.09.2002
(51) Int. Cl.: B01J 37/02, B01J 23/40

(54) **CATALYST USING METAL CARRIER AND MANUFACTURING METHOD THEREOF**
KATALYSATOR MIT METALLTRÄGER UND VERFAHREN ZU SEINER HERSTELLUNG
CATALYSEUR COMPRENANT UN SUPPORT METALLIQUE ET PROCEDE DE FABRICATION DE CE CATALYSEUR

(30) Priority: 16.10.2001 JP 2001318176; 18.12.2001 JP 2001384976
(43) Date of publication of application: 08.10.2003
(73) Proprietor: NISSAN MOTOR COMPANY LIMITED, Yokohama-shi Kanagawa 221-0023 (JP)
(72) Inventor: KIKUCHI, Hiroto, Hiratsuka-shi, Kanagawa 259-1211 (JP)
(74) Representative: Weber, Joachim
(86) International application number: PCT/JP2002/009345
(87) International publication number: WO 2003/033146

(56) References cited:
- EP-A- 1 068 892
- US-A- 5 674 460
- ZWINKELS M F M ET AL: "Preparation of anchored ceramic coatings on metal substrates: a modified sol-gel technique using colloidal silica sol" JOURNAL OF MATERIALS SCIENCE, CHAPMAN AND HALL LTD. LONDON, GB, vol. 31, no. 23, 1 December 1996 (1996-12-01), pages 6345-6349, XP002163818 ISSN: 0022-2461

## Description

### TECHNICAL FIELD

The present invention relates to a catalyst using a metal carrier, which is used as a catalyst selectively oxidizing CO, the catalyst being used in a fuel cell for example, and more particularly, to a catalyst in which adhesiveness between the metal carrier and a catalyst layer is improved.

### BACKGROUND ART

In general, a fuel cell generates power by utilizing the reaction of forming water from hydrogen and oxygen. Hydrogen serving as a source gas is taken from ethanol for example by the reforming reaction. Since carbon monoxide generated in this case inhibits the power generating reaction, a catalyst for selective oxidation of CO, which reduces an amount of carbon monoxide (CO) by selectively oxidizing CO, is used for the fuel cell. This catalyst for selective oxidation of CO is the one in which a catalyst layer is formed on a carrier, and is generally operated under a condition of relatively low temperature ranging from 80°C to 200°C. Accordingly, as such a carrier, a metal carrier having high heat conductivity is mainly used in order to obtain high controllability for temperature in the above-described temperature range. Moreover, for use in a vehicle, since the fuel cell is required to be lighted, an aluminum carrier, which is lightweight, is mainly used among metal carriers.

In the case of manufacturing a catalyst in which a metal catalyst is formed on the aluminum carrier, a method is widely used, in which, first, slurry containing an inorganic powder supporter such as alumina on which the metal catalyst is supported is prepared, and by use of this slurry, a catalyst layer is formed on an aluminum surface. However, since adhesiveness between the aluminum and the catalyst layer is low, a crack or an exfoliation, is apt to occur in the catalyst layer. Accordingly, various methods below are developed in order to improve the adhesiveness between the aluminum and the catalyst layer.

First, a method is known, in which a metal surface (aluminum surface) is treated with an acidic or alkaline etchant to form irregularities on the metal surface, and a catalyst layer is engaged with such an irregular portion. In the case of using this method, the adhesiveness between the metal and the catalyst layer is enhanced due to a so-called anchor effect. However, a pretreatment process of etching the metal surface and washing the etchant off is needed, and manufacturing costs are increased. Moreover, the acidic or alkaline etchant sometimes remains, and in a portion where the etchant remains, corrosion of the metal is occurred.

Moreover, Japanese Patent Laid-Open Publication' H4-48931 (published in 1992) discloses a method, in which glycerin or polyethylene glycol is added to slurry containing inorganic powder (supporters). As described above, the glycerin or polyethylene glycol is added into the slurry, and thus cohesion of the inorganic powder, which is caused during drying, is inhibited, making it possible to inhibit a crack in the catalyst layer or an exfoliation of the catalyst layer. However, this method does not positively enhance the adhesiveness between the metal and the catalyst layer but does simply inhibit the cohesion of the inorganic powder.

Moreover, Japanese Patent Laid-Open publication H8-332394 (published in 1996) discloses a method, in which a honeycomb carrier made of a stainless steel plate containing the aluminum is subjected to a heat treatment in the atmosphere, and thus a metal oxide-coating layer is formed on a surface of the stainless steel plate to form a catalyst layer on the oxide-coating layer. Although adhesiveness between the stainless steel plate and the catalyst layer can be improved by the oxide-coating layer, a pretreatment process at high temperature is needed in order to form the oxide-coating layer, and manufacturing costs are increased. Moreover, though a brazing material such as solder is used in the metal carrier having a honeycomb structure, the heat treatment at high temperature is impossible when a thermal resistance of the solder is low. As a method for forming an oxide-coating layer, there is also known a method for forming an oxide-coating layer chemically, that is, the anodized aluminum treatment, and however, special device and process for the anodized aluminum treatment are needed, and manufacturing costs are increased.

EP-A 1 068 892 discloses a exhaust gas purifying catalyst comprising a zeolitic absorbing layer, US-A 5, 674,460 discloses a reactor for the catalytic removal of CO in high-H₂ gas, and XP-002163818 (by ZWINKELS) discloses preparation of anchored ceramic coatings on metal substrates: a modified sol-gel technique using colloidal silica sol.

### DISCLOSURE OF INVENTION

It is an object of the present invention to provide a catalyst, in which a metal carrier containing aluminium and a catalyst layer formed on the metal carrier have excellent adhesiveness, and which is able to be manufactured inexpensively. It is another Object of the present invention to provide a manufacturing method of the catalyst.

A first aspect of the present invention is a catalyst including a metal carrier containing aluminum, an adhesive layer formed on the metal carrier, the adhesive layer containing crystalline silicate and silica, and a catalyst layer formed on the adhesive layer wherein an amount of aluminium in the metal carrier is 90 atom % or more .

A second aspect of the present invention is a method for manufacturing the catalyst of the first aspect, the method including forming an adhesive layer by coating first slurry containing crystalline silicate and silica sol on a metal carrier containing aluminum, and forming a catalyst layer by coating second slurry containing a metal catalyst on the adhesive layer.

### BRIEF DESCRIPTION OF DRAWINGS

FIG. 1 is a perspective view showing a metal carrier containing honeycomb-shaped aluminum according to an embodiment of the present invention.
FIG. 2 is an enlarged cross-sectional view showing a structure of a catalyst according to the embodiment of the present invention.
FIG. 3 is a table exemplifying aluminum alloys usable as carrier materials for the catalyst of the embodiment of the present invention.
FIG. 4 is a table showing examples, a comparative example, referential examples and referential comparative examples of the present invention.
FIG. 5 is a graph showing relationships between pore size and pore volumes of the referential examples 1 to 3 of the present invention.
FIG. 6 is a schematic view of a testing device for measuring strength of a coating layer.

### BEST MODE CARRYING OUT THE INVENTION

The present invention is configured not to directly provide a catalyst layer on a metal carrier but to provide the catalyst layer by interposing an adhesive layer made of crystalline silicate and silica therebetween, thus making it possible to enhance adhesiveness between the metal and the catalyst layer and to prevent a crack in the catalyst layer and an exfoliation of the catalyst layer. Accordingly, in a catalyst using a carrier containing aluminum as the metal carrier wherein an amount of aluminium in the metal carrier is 90 atom % or more, good adhesiveness with the adhesive layer can be provided.

Moreover, if zeolite is used as the above-described crystalline silicate, a three-dimensional porous structure constituted of the zeolite and the silica exerts the anchor effect more effectively, and therefore, the adhesiveness of the catalyst layer can be enhanced more. Furthermore, in comparison with a method for forming irregularities on a carrier surface and a method for performing an anodized aluminum treatment for a carrier surface, the catalyst can be manufactured inexpensively.

MFI-type zeolite, mordenite or β-zeolite is used as the above-described zeolite, and thus an adhesive layer particularly excellent in adhesiveness to the metal containing the aluminum can be formed. Moreover, these compounds are also excellent as supporters for the metal catalyst, and can form a catalyst layer particularly excellent in adhesiveness by an excellent anchor effect.

Particularly, by use of ZSM-5 of the MFI-type zeolite, the adhesiveness between the metal carrier containing the aluminum and the adhesive layer can be particularly firmed.

The zeolite contains a silica (SiO₂ component and an alumina (Al₂O₃) component. A mole ratio of the silica (SiO₂) component to the alumina (Al₂O₃) component (SiO₂/Al₂O₃) is set more than or equal to 50, and thus a firm adhesive layer can be formed. Particularly, in the case of setting the mole ratio of the silica component to the alumina component more than or equal to 100, adhesive force can be exerted more significantly.

Moreover, a BET surface area of the adhesive layer is set at a range from 280 to 350 m²/g, thus the crystalline silicate and the silica can be bonded sufficiently, and the adhesive force with the aluminum can be strengthened.

In the catalyst in which the catalyst layer is provided on the metal carrier containing the aluminum by interposing therebetween the adhesive layer containing the zeolite and the silica, when peaks of a micropore distribution of the adhesive layer exist in a range from more than or equal to 1.7 nm to less than 3.7 nm and in a range from more than or equal to 3.7 nm to less than 85 nm, the bonding between the crystalline silicate and the silica is enhanced, and the catalyst becomes a catalyst excellent in adhesive force between the metal carrier containing the aluminum and the catalyst layer. In this case also, the MFI-type zeolite, the mordenite or the β-zeolite is used as the zeolite, and thus the adhesive layer particularly excellent in adhesiveness to the metal containing the aluminum can be formed. Moreover, ZSM-5 as the MFI-type zeolite is used, in which a mole ratio of the silica to the alumina (SiO₂/Al₂O₃) ranges from 600 to 800, and thus the adhesiveness of the catalyst layer can be made particularly excellent. Furthermore, the BET surface area of the adhesive layer is set at the range from 280 to 350 m²/g, thus the crystalline silicate and the silica can be bonded favorably, and the adhesive force with the aluminum can be strengthened.

Moreover, the above-described catalyst good in adhesiveness in this embodiment can be obtained in such a manner that first slurry containing the crystalline silicate, silica sol and water is coated on the metal carrier containing the aluminum, second slurry further coated thereon is dried and baked to form the adhesive layer, and further, slurry containing the catalyst is coated on the adhesive layer, and then dried and baked.

In the above-described manufacturing method, acidic sol in which a mean diameter of silica particles ranges from 5 to 60 nm is used as the first slurry, and thus the adhesiveness of the formed adhesive layer to the metal can be sufficiently secured, and the crack in the adhesive layer or the exfoliation of the adhesive layer can be prevented.

A mass ratio of the crystalline silicate to the silica contained in the silica sol (crystalline silicate: silica) in the first slurry is set in a range from 90: 10 to 70: 30, and thus the adhesiveness of the formed adhesive layer to the metal can be sufficiently secured, and the crack in the adhesive layer and the exfoliation in the adhesive layer can be prevented.

A mean diameter of particles of the first slurry is set in a range from 2 to 6 µm, and thus the adhesiveness of the formed adhesive layer can be enhanced.

pH of the first slurry is set in a range from 3 to 8, and thus gelation of the slurry can be inhibited, and workability in manufacturing the catalyst can be enhanced.

Subsequently, description will be made in detail for a catalyst and a manufacturing method thereof of the present invention.

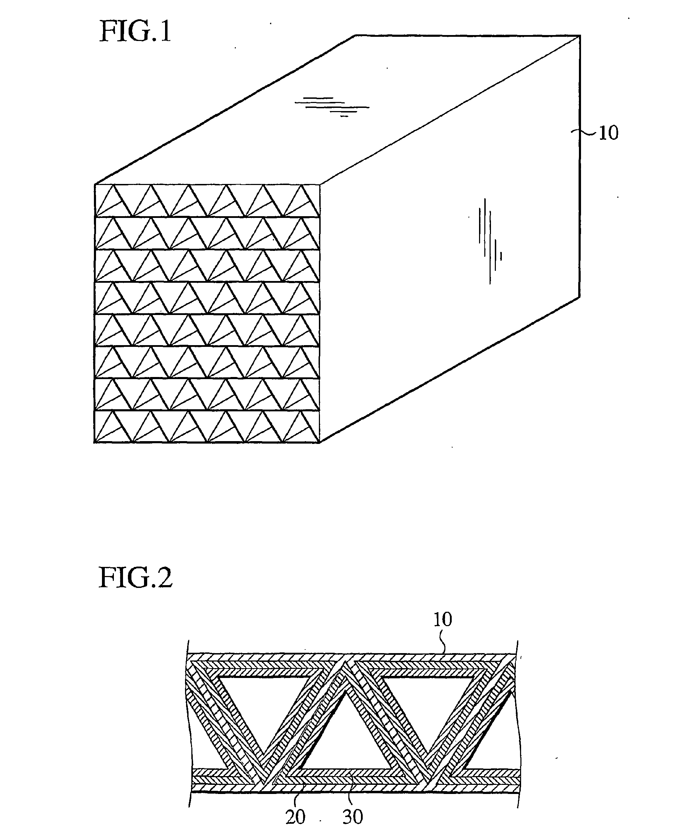

The catalyst of the embodiment of the present invention is configured such that, as shown in FIG. 2, an adhesive layer 20 containing the crystalline silicate and the silica is formed on a metal carrier 10 as shown in FIG. 1, and a catalyst layer 30 is further formed on the adhesive layer 20.

The metal carrier 10 is metal containing aluminum, wherein an amount of aluminium in the metal carrier is 90 atom % or more, that is lightweight and high in heat conductivity. In this application, "metal containing aluminum" involves not only a metal material made only of aluminum but also an aluminum alloy, an aluminum-containing stainless steel, for example.

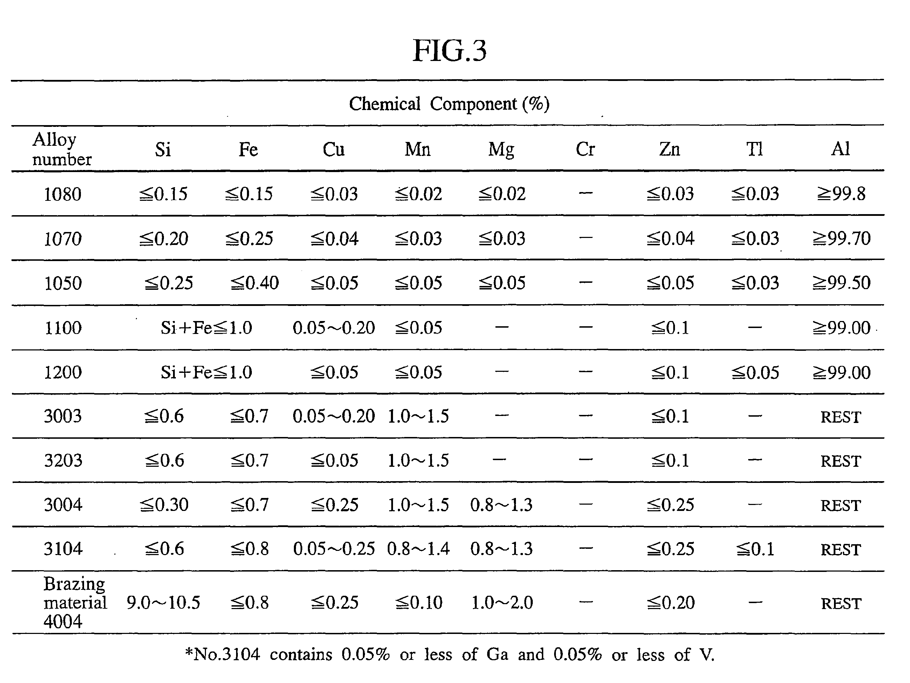

The metal containing the aluminum, which is usable as a metal carrier material, may be manufactured by a publicly known manufacturing method, and metal containing various types of commercially available aluminum may be used therefor. For example, the ones described in JIS H4000 can be used. For reference, component examples of aluminum alloys are shown in a table of FIG. 3.

The effect of enhancing the adhesiveness between the metal carrier 10 and the catalyst layer 30 is effective when the metal carrier material is metal containing aluminum atoms at 90 atom% or more, further effective when the metal contains the aluminum atoms at 95 atom% or more, and particularly effective when metal contains the aluminum atoms at 99 atom% or more. Moreover, as the metal carrier, a brazing sheet in which a brazing material is clad on a surface of a core material, the brazing sheet being described in JIS Z3263, may be used.

A shape of the metal carrier 10 containing the aluminum may be any form including a honeycomb shape and a metal table shape. In the case of using the honeycomb-shaped metal carrier as shown in FIG 1, since a contact area of a gas and the catalyst is expanded, efficiency of a catalysis can be enhanced.

In the catalyst of this embodiment, as shown in FIG. 2, the adhesive layer 20 containing the crystalline silicate and the silica is formed on the metal carrier 10. Here, the adhesive layer 20 is referred to as a layer that is interposed between the catalyst layer 30 containing the metal catalyst and the metal carrier 10 to adhere both of them.

The crystalline silicate typically includes zeolite as aluminosilicate represented by a general formula: xM₂OyAl₂O₃zSiO₂nH₂O (where n = 0 is included, and M denotes one or two or more types of metal). Moreover, as the zeolite, though not being particularly limited, MFI-type zeolite, mordenite, β-zeolite, FAU (faujasite)-type zeolite, FER (ferrierite)-type zeolite, ERI (erionite)-type zeolite, LTL (L-type)-type zeolite, CHA (chabasite)-type zeolite are given.. Among them, it is preferable to use the MFI-type zeolite, the mordenite or the β-zeolite singly or in combination thereof in consideration of the adhesiveness to the metal containing the aluminum. Moreover, these compounds are also excellent as supporters for the metal catalyst, and can form a catalyst layer particularly excellent in adhesiveness by an excellent anchor effect. Moreover, as the MFI-type zeolite, ZSM-5, ZSM-8, Zeta 1, Zeta 3, Nu-4, Nu-5, TZ-1, TPZ-1, TS-1 are given. Among them, the ZSM-5 is particularly suitable in consideration of the adhesiveness with the aluminum. The crystalline silicate can be prepared by using a variety of publicly known methods, and commercially available crystalline silicate may be used. A shape thereof is not particularly limited. In consideration of the workability, it is preferable that the crystalline silicate for use be powder.

The mole ratio of the silica contained in the crystalline silicate to the alumina (SiO₂/Al₂O₃) is preferably 50 or more, and more preferably, 100 or more. This is because, if the mole ratio of the silica to the alumina (SiO₂/Al₂O₃) is less than 50, then the adhesiveness between the adhesive layer and the metal carrier, particularly, the aluminum is deteriorated, and the crack or the exfoliation may possibly occur. An upper limit of the mole ratio of the silica to the alumina is not particularly limited. However, in consideration of the adhesiveness, the upper limit of 1500 or less can be said to be appropriate. As the mole ratio of the silica to the alumina (SiO₂/Al₂O₃) in the crystalline silicate in a preferred combination, the mole ratio of the silica to the alumina (SiO₂/Al₂O₃) is preferably set in a range from 600 to 800, using the ZSM-5 that is the MFI-type zeolite as the crystalline' silicate. The mole ratio of the silica to the alumina in the crystalline silicate can be obtained by dividing "the mole number of silicon atoms" by "a half of the mole number of aluminum atoms" contained in the crystalline silicate. The mole number of silicon atoms and the mole number of aluminum atoms can be measured by use of an analysis device such as a plasma-induced spectroscopic device.

Moreover, single silica (SiO₂) is also contained in the adhesive layer 20. As will be described later, it is possible to form the adhesive layer 20 containing the crystalline silicate and the silica in such a manner that slurry obtained by mixing the crystalline silicate and the silica sol is prepared, and the slurry is coated on the surface of the metal carrier containing the aluminum, then dried and baked.

Note that, if the silica sol is not added to the slurry, then it becomes difficult to form the coating, and it becomes difficult to form the adhesive layer 20 itself.

The inventors of the present invention found that the adhesive layer 20 containing the crystalline silicate and the silica has good adhesiveness with the aluminum. What is conceived as the reason of enhancing the adhesiveness is that a three-dimensional mesh structure constituted of the crystalline silicate and the silica is appropriately formed in the adhesive layer 20, and that this structure exerts the anchor effect effectively.

A thickness of the adhesive layer 20 containing the crystalline silicate and the silica should be decided depending on types of the crystalline silicate and the silica for use and the ratio thereof. Accordingly, the thickness is not particularly limited. However, since sufficient adhesive force may not possibly be obtained when the adhesive layer 20 is too thin, it is preferable that the thickness of the adhesive layer 20 be 10 µm or more in thickness after the drying. On the other hand, when the adhesive layer 20 is too thick, this may cause an increase of the manufacturing costs. Therefore, it is preferable that the thickness of the adhesive layer 20 be 30 µm or less in thickness after the drying. Note that adjustment of the thickness of the adhesive layer 20 can be controlled in the manufacturing process. For example, when the slurry obtained by mixing the crystalline silicate and the silica is coated on the surface of the metal carrier containing the aluminum, it is satisfactory to control the amount of coating the slurry obtained by mixing the crystalline silicate and the silica.

In the formed adhesive layer 20, it is preferable that the peaks of the micropore distribution exist in the range from more than or equal to 1.7 nm to less than 3.7 nm and in the range from more than or equal to 3.7 nm to less than 85 nm. When the peaks of the micropore distribution satisfy the above-described conditions, the bonding between the crystalline silicate and the silica can be made good, and the adhesive force of the aluminum of the carrier can be strengthened. Note that the micropore distribution of the adhesive layer can be measured by use of publicly known means, for example, can be measured by use of a micropore distribution measuring device using a capillary condensation process.

Moreover, it is preferable that the BET surface area of the adhesive layer be set in the range from 280 to 350 m²/g. If the BET surface area is less than 280 m²/g, then the bonding between the crystalline silicate and the silica becomes insufficient, and it becomes difficult to form the coating. Therefore, the adhesive force of the carrier with aluminum may possibly be lowered. On the contrary, also, when the BET surface area exceeds 350 m²/g, the bonding between the crystalline silicate and the silica becomes insufficient, and it becomes difficult to form the coating. Therefore, the adhesive force with the aluminum may possibly be lowered. The BET surface area can be measured by a commercially available measuring device, and for example, a device utilizing nitrogen adsorption can be used.

As shown in FIG. 2, on the adhesive layer 20 containing the crystalline silicate and the silica, the catalyst layer 30 containing the metal catalyst is formed. The metal catalyst may be anything as long as it has catalysis. For example, palladium, ruthenium, rhodium, platinum, osmium, copper, iridium, nickel, metal oxides thereof, alloys containing these metals, are given. Note that, in the case of using the catalyst according to this embodiment as a catalyst for oxidation of CO of a fuel cell, a catalyst exerting good catalysis at the temperature ranging from 80°C to 200°C is preferable as the metal catalyst, and particularly, ruthenium or platinum is preferable.

Since the surface of the adhesive layer 20 formed of the crystalline silicate and the silica is porous, when the catalyst layer 30 is formed on the surface, the adhesiveness between the catalyst layer 30 and the adhesive layer 20 is enhanced owing to the anchor effect.

The amount of the metal catalyst dispersed in the catalyst layer 30 is an amount to be decided in accordance with a property of the catalyst layer 30, a type of the metal catalyst for use and a purpose of use of the catalyst. Accordingly, the amount is not particularly limited. However, since the catalysis may possibly become insufficient when the amount of the catalyst is too small, it is preferable that the amount be 50 g/liter or more. On the other hand, when the amount of the catalyst is too large, catalytic performance in proportion to the amount of the catalyst cannot be obtained, and this may cause the increase of the manufacturing costs. Therefore, it is preferable that the amount of the catalyst be 450 g/liter or less. Note that the adjustment of the amount of the catalyst can be controlled in the manufacturing process. For example, when the slurry containing the metal catalyst is coated on the adhesive layer, it is satisfactory to control the amount of coating the slurry containing the metal catalyst.

As described above, in the catalyst of the embodiment of the present invention, the adhesiveness between the metal carrier containing the aluminum and the adhesive layer is high, and the adhesiveness between the adhesive layer and the catalyst layer is also high. Therefore, the crack or the exfoliation on the surface of the catalyst can be suppressed. Moreover, since it is not necessary that the metal carrier be subjected to a special treatment such as provision of the irregularities, the catalyst of this embodiment has an effect of reducing the manufacturing costs thereof.

Subsequently, description will be made for an embodiment of the catalyst manufacturing method of the present invention. In this manufacturing method, first, the slurry containing the crystalline silicate and the silica sol is coated on the metal carrier containing the aluminum to form the adhesive layer, and on the adhesive layer, the slurry containing the metal catalyst is coated to form the catalyst layer.

Concretely, first, the metal carrier containing the aluminum is prepared. On the surface of this metal carrier, the slurry containing the crystalline silicate and the silica sol is coated. Such coating may be carried out by a brush or coater, or alternatively, by dipping the metal into the slurry in a tank. Such a dipping is also involved in the concept of "coating" in this application.

The slurry containing the crystalline silicate and the silica sol, which is used for forming the adhesive layer, can be prepared by mixing the crystalline silicate and the silica sol. The silica sol is referred to as a colloidal solution in which the silica as a solid content is dispersed into a solvent such as water. In consideration of the workability, it is preferable to use water as the solvent. The silica sol may be prepared by use of a variety of publicly known manufacturing methods, and commercial products such as ST-OXS, ST-OS, ST-OUP, ST-PSSO made by Nissan Chemical, Ltd. may be used.

Whichever the particle diameter of the silica contained in the silica sol may be too small or too large, there is a possibility of causing the crack or the exfoliation when the adhesive layer is formed. In consideration of this, it is preferable that the mean particle diameter of the silica sol be set in a range from 5 to 60 nm.

Moreover, it is preferable that the silica sol be acidic. In the case of forming the adhesive layer by use of the acidic silica sol, the adhesiveness between the adhesive layer and the aluminum is enhanced, and the occurrence of the crack or the exfoliation can be prevented more effectively.

For mixing the crystalline silicate and the silica sol, for example, it is satisfactory to appropriately select the one from a ball mill, a kneader, a beads mill, a roll mill, a sand mill, in accordance with viscosity of the slurry. It is satisfactory to adjust the viscosity of the slurry to be preferred viscosity in consideration of the workability of coating the slurry.

In the slurry for use in forming the adhesive layer, it is preferable that the mass ratio of the crystalline silicate to the silica contained in the silica sol (crystalline silicate: silica) be set in a range from 90: 10 to 70: 30. If the range is as described above, the adhesiveness of the adhesive layer can be enhanced, and the effect of preventing the occurrence of the crack or the exfoliation is enhanced. Moreover, it is preferable that a mean diameter of particles made of the crystalline silicate and the silica, which are contained in the slurry prepared by mixing and pulverizing the crystalline silicate and the silica sol, that is, a mean diameter of particles contained in the slurry, be set in a range from 2 to 6 µm. This is because the adhesiveness of the adhesive layer may possibly be lowered when the mean particle diameter is out of this range. It is possible to adjust the particle diameter by controlling the capability of a disperser for use in the mixing.

Moreover, it is preferable that pH of the slurry containing the crystalline silicate and the silica sol be set in a range from 3 to 8. When the pH is out of the above-described range, the slurry is gelated, and the adhesive layer (coating layer) cannot possibly be formed.

After the slurry containing the crystalline silicate and the silica sol is coated on the surface of the metal carrier, the slurry is dried, and further baked. The drying and baking conditions depend on the type of the slurry for use and the amount of coating the slurry, and cannot be uniquely prescribed. However, the drying is usually carried out at the temperature ranging from 100 to 150°C. Moreover, the baking is carried out at the temperature ranging from 300 to 500°C for approximately 30 to 120 minutes.

After forming the adhesive layer, the slurry containing the metal catalyst is coated thereon. Such coating may be carried out by a brush or a coater, or alternatively, by dipping the metal carrier into the slurry in a container. As the slurry for use in forming the catalyst layer, the one similar to slurry for use in general in the catalyst manufacture can be used, and the slurry is not particularly limited. For example, slurry containing supporters on which a metal catalyst to be dispersed is supported, the supporter being such as alumina, can be used.

After coating the slurry containing the metal catalyst on the surface of the metal carrier, the slurry is dried, and further baked. The drying and baking conditions depend on the slurry for use and the amount of coating the slurry, and cannot be uniquely prescribed. However, the drying is usually carried out at the temperature ranging from 100 to 150°C. Moreover, the baking is carried out at the temperature ranging from 300 to 500°C for approximately 30 to 120 minutes.

As the manufacturing method, a method obtained by improving the above-described method can also be used. For example, if no problem occurs in homogeneity in the finished product the 2-coat 1-bake process, in which the drying of the adhesive layer and the catalyst layer is conducted at once, for example may be used.

### EXAMPLES

The effect of the present invention will be validated by use of referential examples and examples below. However, it is a matter of course that the technical scope of the present invention is not limited to the exemplifications below. First, in order to verify the adhesiveness of the coating layer (adhesive layer or catalyst layer) formed on a surface of aluminum to the constituent body containing aluminum as a main component, the following tests were carried out.

### (Comparative example 1)

166 g of γ alumina having Ru supported thereon at 2 mass%, 9 g of boemite alumina, 35 g of nitric acid at 10 mass%, and 290 g of water were poured into a ball mill (for 500 g; ball diameter of 5 mm). The contents were milled for 40 minutes by the ball mill, and thus slurry was prepared, in which a solid content was 35 mass%, a mean diameter of particles contained in the slurry was 3.9 µm, pH was 5.2, and viscosity was 4.5 × 10⁻² Pa·s (45 cP).

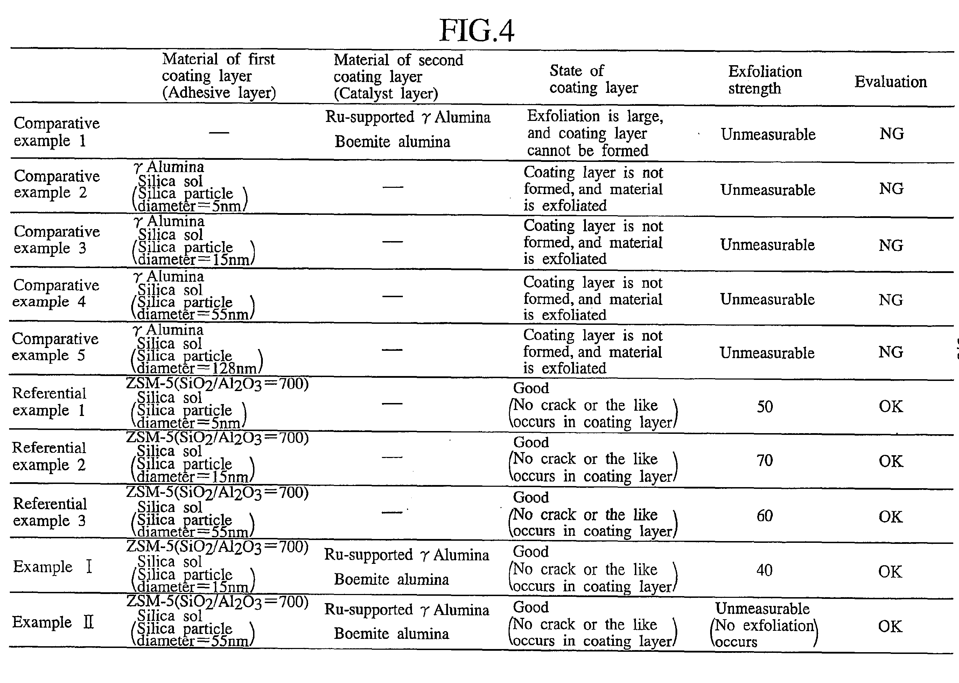

This slurry was coated on an aluminum plate (material: A3003, 50 mm × 50 mm × 1 mm (thickness)), dried at 130°C, and then baked at 400°C for 30 minutes. Thus, a coating layer having a composition equivalent to that of the catalyst layer was formed. In this coating layer, cracks were many, and exfoliations occurred. When the aluminum plate was slanted, the coating layer was exfoliated. Note that, when a BET surface area of the coating layer was measured, it was 153 m²/g. The results are shown in the table of FIG. 4.

### (Comparative example 2)

160 g of γ alumina and 400 g of silica sol (ST-OXS made by Nissan Chemical, Ltd.; mean diameter of silica particles of 5 nm, pH 2.8, SiO₂: contained at 10 mass%) were poured into the ball mill (for 500 g; ball diameter of 5 mm). The contents were milled for 40 minutes by the ball mill, and thus slurry was prepared, in which a solid content was 35.7 mass%, a mean diameter of particles contained in the slurry was 4.2 µm, pH was 4.3, and viscosity was 3.1 × 10⁻² Pa·s (31 cP).

This slurry was coated on an aluminum plate (material: A3003, 50 mm × 50 mm × 1 mm (thickness)), dried at 130°C, and then baked at 400°C for 30 minutes. Thus, a coating layer equivalent to the adhesive layer was formed. The coating layer did not become a coating, and when the aluminum plate was slanted, the coating layer was exfoliated. Note that, when a BET surface area of the coating layer was measured, it was 225 m²/g. The results are shown in the table of FIG. 4.

### (Comparative example 3)

160 g of γ alumina, 200 g of silica sol (ST-OS made by Nissan Chemical, Ltd.; mean diameter of silica particles of 15 nm, pH 3.2, SiO₂: contained at 20 mass%) and 140 g of water were poured into the ball mill (for 500 g; ball diameter of 5 mm). The contents were milled for 40 minutes by the ball mill, and thus slurry was prepared, in which a solid content was 40 mass%, a mean diameter of particles contained in the slurry was 4.3 µm pH was 4.7, and viscosity was 4.2 × 10⁻² Pa·s (42 cP).

This slurry was coated on an aluminum plate (material: A3003, 50 mm × 50 mm × 1 mm (thickness)), dried at 130°C, and then baked at 400°C for 30 minutes. The coating layer (adhesive layer) did not become a coating, and when the aluminum plate was slanted, the coating layer (adhesive layer) was exfoliated. Note that, when a BET surface area of the coating layer was measured, it was 210 m²/g. The results are shown in the table of FIG. 4.

### (Comparative example 4)

160 g of γ alumina, 267 g of silica sol (ST-OUP made by Nissan Chemical, Ltd.; mean diameter of silica particles of 55 nm, pH 2.8, SiO₂: contained at 15 mass%) and 73 g of water were poured into the ball mill (for 500 g; ball diameter of 5 mm). The contents were milled for 40 minutes by the ball mill, and thus slurry was prepared, in which a solid content was 40 mass%, a mean diameter of particles contained in the slurry was 4.2 µm, pH was 4.3, and viscosity was 5.8 × 10⁻² Pa·s (58 cP).

This slurry was coated on an aluminum plate (material: A3003, 50 mm × 50 mm × 1 mm (thickness)), dried at 130°C, and then baked at 400°C for 30 minutes. The coating layer (adhesive layer) did not become a coating, and when the aluminum plate was slanted, the coating layer (adhesive layer) was exfoliated. Note that, when a BET surface area of the coating layer was measured, it was 202 m²/g. The results are shown in the table of FIG. 4.

### (Comparative example 5)

140 g of γ alumina, 292 g of silica sol (ST-PSSO made by Nissan Chemical, Ltd.; mean diameter of silica particles of 128 nm, pH 3.1, SiO₂: contained at 12 mass%) and 68 g of water were poured into the ball mill (for 500 g; ball diameter of 5 mm). The contents were milled for 40 minutes by the ball mill, and thus slurry was prepared, in which a solid content was 35 mass%, a mean diameter of particles contained in the slurry was 4.4 µm, pH was 4.5, and viscosity was 7.1 × 10⁻² Pa·s (71 cP).

This slurry was coated on an aluminum plate (material: A3003, 50 mm × 50 mm × 1 mm (thickness)), dried at 130°C, and then baked at 400°C for 30 minutes. The coating layer (adhesive layer) did not become a coating, and when the aluminum plate was slanted, the coating layer (adhesive layer) was exfoliated. Note that, when a BET surface area of the coating layer was measured, it was 196 m²/g. The results are shown in the table of FIG. 4.

### (Referential example 1)

160 g of crystalline silicate (ZSM-5; SiO₂/Al₂O₃ = 700) and 400 g of silica sol (ST-OXS made by Nissan Chemical, Ltd.; mean diameter of silica particles of 5 nm, pH 2.8, SiO₂: contained at 10 mass%) were poured into the ball mill (for 500 g; ball diameter of 5 mm). The contents were milled for 15 minutes by the ball mill, and thus slurry was prepared, in which a solid content was 35.7 mass%, a mean diameter of particles contained in the slurry was 4.2 µm, pH was 4.3, and viscosity was 3.9 × 10⁻² Pa·s (39 cP).

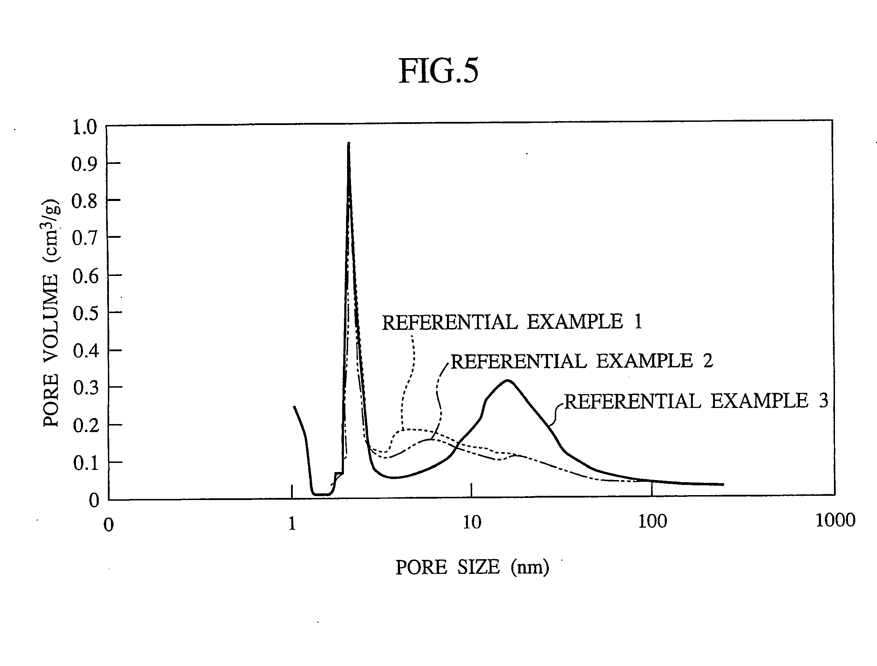

This slurry was coated on an aluminum plate (material: A3003, 50 mm × 50 mm × 1 mm (thickness)), dried at 130°C, and then baked at 400°C for 30 minutes. In such a manner, a coating layer having a composition equivalent to that of the adhesive layer was formed. In this coating layer, neither crack nor exfoliation was confirmed. An exfoliation strength of this coating layer (adhesive layer) was 50 g. Moreover, a BET surface area of this coating layer was 340 m²/g. The results are shown in the table of FIG. 4. When a micropore distribution of the adhesive layer was measured by a micropore distribution measuring device using the capillary condensation process, peaks thereof were shown at 2.1 nm and 4.8 nm as shown in FIG. 5.

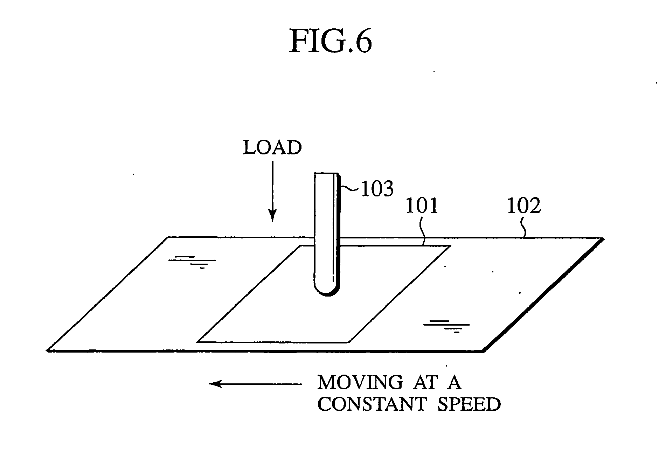

Here, description will be made for a measuring method of the exfoliation strength with reference to the drawing. FIG. 6 is a schematic view of a strength testing device for a coating layer, which was used in the tests of these examples. An aluminum plate 101 having a surface formed with a coating layer was fixed on a stage 102 movable at a constant speed (82 mm/min) such that the coating layer was positioned upward. A push stick 103, in which a tip is chamfered with a radius of 3R and a thickness of 1 mm and is provided with a scratch portion, was brought into contact with the coating layer and applied with a load (×1). Then, the stage 102 was moved at the constant speed. An exfoliation state of the coating layer in this case was examined. When the exfoliation occurred on an interface of the coating layer, the exfoliation was determined to occur at the load (×1). When the exfoliation did not occur at the load (×1), the load was increased, the push stick 103 was brought into contact with another spot, and the stage 102 was moved at a constant speed similarly. This operation was repeated, and a load at which the coating layer was exfoliated was defined as a value of the exfoliation strength. Note that, when the coating layer had a multi-layer structure, a load at which any piece of the coating layer was exfoliated was defined as the exfoliation strength.

### (Referential example 2)

160 g of crystalline silicate (ZSM-5; SiO₂/Al₂O₃ = 700), 200 g of silica sol (ST-OS made by Nissan Chemical, Ltd.; mean diameter of silica particles of 15 nm, pH 3.2, SiO₂: contained at 20 mass%) and 140 g of water were poured into the ball mill (for 500 g; ball diameter of 5 mm). The contents were milled for 15 minutes by the ball mill, and thus slurry was prepared, in which a solid content was 40 mass%, a mean diameter of particles contained in the slurry was 4.1 µm, pH was 4.5, and viscosity was 4.3 × 10⁻² Pa·s (43 cP).

This slurry was coated on an aluminum plate (material: A3003, 50 mm × 50 mm × 1 mm (thickness)), dried at 130°C, and then baked at 400°C for 30 minutes. In the coating layer (adhesive layer), neither crack nor exfoliation was confirmed. Moreover, when an exfoliation strength of this coating layer (adhesive layer) was measured similarly to the referential example 1, it was 70 g. Note that, when a BET surface area of this coating layer was measured, it was 303 m²/g. The results are shown in the table of FIG. 4. When a micropore distribution of the formed adhesive layer was measured, peaks thereof were shown at 2.1 nm and 6.4 nm as shown in FIG. 5.

### (Referential example 3)

160 g of crystalline silicate (ZSM-5; SiO₂/Al₂O₃ = 700), 267 g of silica sol (ST-OUP made by Nissan Chemical, Ltd.; mean diameter of silica particles of 55 nm, pH 2.8, SiO₂: contained at 15 mass%) and 73 g of water were poured into the ball mill (for 500 g; ball diameter of 5 mm). The contents were milled for 15 minutes by the ball mill, and thus slurry was prepared, in which a solid content was 40 mass%, a mean diameter of particles contained in the slurry was 4.3 µm, pH was 4.1, and viscosity was 5.8 × 10⁻² Pa·s (58 cP).

This slurry was coated on an aluminum plate (material: A3003, 50 mm × 50 mm × 1 mm (thickness)), dried at 130°C, and then baked at 400°C for 30 minutes. In the coating layer (adhesive layer), neither crack nor exfoliation was confirmed. Moreover, when an exfoliation strength of this coating layer (adhesive layer) was measured similarly to the referential example 1, it was 60 g. Note that, when a BET surface area of this coating layer was measured, it was 291 m²/g. The results are shown in the table of FIG. 4. When a micropore distribution of the formed adhesive layer was measured, peaks thereof were shown at 2.1 nm and 16 nm as shown in FIG. 5.

### (Example I)

160 g of crystalline silicate (ZSM-5; SiO₂/Al₂O₃ = 700), 200 g of silica sol (ST-OS made by Nissan Chemical, Ltd.; mean diameter of silica particles of 15 nm, pH 3.2, SiO₂: contained at 10 mass%) and 140 g of water were poured into the ball mill (for 500 g; ball diameter of 5 mm). The contents were milled for 15 minutes by the ball mill, and thus slurry was prepared, in which a solid content was 40 mass%, a mean diameter of particles contained in the slurry was 4.1 µm, pH was 4.5, and viscosity was 4.3 × 10⁻² Pa·s (43 cP).

This slurry was coated on an aluminum plate (material: A3003, 50 mm × 50 mm × 1 mm (thickness)), dried at 130°C, then baked at 400°C for 30 minutes, and thus a first coating layer equivalent to the adhesive layer was formed. Furthermore, on this first coating layer (adhesive layer), the slurry prepared in the comparative example 1 was coated, dried at 130°C, then baked at 400°C for 30 minutes, and thus a second coating layer equivalent to the catalyst layer was formed. In any of the coating layers, neither crack nor exfoliation was confirmed. Moreover, when exfoliation strengths of the first and second coating layers (adhesive layer and catalyst layer) were measured similarly to the referential example 1, they were 40 g. Note that, since the adhesive layer and the catalyst layer were in contact with each other in this example, the BET surface area was not measured. The results are shown in the table of FIG. 4.

### (Example II)

160 g of crystalline silicate (ZSM-5; SiO₂/Al₂O₃ = 700), 200 g of silica sol (ST-OS made by Nissan Chemical, Ltd.; mean diameter of silica particles of 15 nm, pH 3.2, SiO₂: contained at 20 mass%) and 140 g of water were poured into the ball mill (for 500 g; ball diameter of 5 mm). The contents were milled for 15 minutes by the ball mill, and thus slurry was prepared, in which a solid content was 40 mass%, a mean diameter of particles contained in the slurry was 4.1 µm, pH was 4.5, and viscosity was 4.3 × 10⁻² Pa·s (43 cP).

This slurry was coated on the honeycomb-shaped aluminum metal shown in FIG. 1, dried at 130°C, then baked at 400°C for 30 minutes, and thus a first coating layer as the adhesive layer was formed. On this coating layer (adhesive layer), the slurry prepared in the comparative example 1 was coated, dried at 130°C, then baked at 400°C for 30 minutes, and thus a second coating layer equivalent to the catalyst layer was formed. In such a manner, a catalyst having the structure shown in FIG. 2 was obtained.

Exfoliation strengths of the first and second coating layers were not able to be measured since the catalyst layer and the adhesive layer were coated in the inside of the honeycomb-shaped aluminum metal. However, as long as the layers were observed, neither crack nor exfoliation was confirmed in any of the coating layers. Moreover, in this example, since the adhesive layer and the catalyst layer were in contact with each other, the BET surface area was not measured. The results are shown in the table of FIG. 4.

As described above, it was confirmed that the adhesive layer and the aluminum metal, or the catalyst layer and the aluminum metal with the adhesive layer interposed therebetween, which are according to the embodiment of the present invention, were excellent in adhesiveness, and caused neither crack nor exfoliation.

Although the inventions have been described above by reference to certain embodiments of the inventions, the inventions are not limited to the embodiments described above. Modifications and variations of the embodiments described above will occur to those skilled in the art, in light of the above teachings. The scope of the invention is defined with reference to the following claims.

### INDUSTRIAL APPLICABILITY

The catalyst of the present invention can be applied to various catalysts for use under a temperature condition of several hundred degrees centigrade or less. Particularly, the catalyst can be effectively used as a catalyst for selective oxidation of CO for selectively oxidizing CO generated in the fuel cell. Moreover, for the fuel cell, the catalyst can be used as a catalyst for selective oxidation of CO for an in-vehicle fuel cell as well as a compact power generating fuel cell of a stationary type.

## Claims

1. A catalyst, comprising:
a metal carrier (10) containing aluminum;
an adhesive layer (20) formed on the metal carrier (10), the adhesive layer (20) containing crystalline silicate and silica; and
a catalyst layer (30) formed on the adhesive layer (20),
wherein an amount of the aluminium in the metal carrier (10) is 90 atom% or more.

2. The catalyst according to claim 1,
wherein the crystalline silicate is zeolite.

3. The catalyst according to claim 2,
wherein the zeolite is one or more selected from the group consisting of MFI- type zeolite, mordenite and β-zeolite.

4. The catalyst according to claim 3,
wherein the MFI-type zeolite is ZSM-5.

5. The catalyst according to claim 2,
wherein a mole ratio of silica to alumina (SiO₂/Al₂O₃) in the zeolite is 50 to 1,500.

6. The catalyst according to claim 2,
wherein a mole ratio of silica to alumina (SiO₂/Al₂O₃) in the zeolite is 100 to 1,500.

7. The catalyst according to claim 1,
wherein the adhesive layer has a BET surface area of 280 to 350 m²/g.

8. The catalyst according to claim 1,
wherein the catalyst layer contains at least any of ruthenium and platinum.

9. The catalyst according to claim 1,
wherein peaks of a micropore distribution of the adhesive layer exist in a range from more than or equal to 1.7 nm to less than 3.7 nm and in a range from more than or equal to 3.7 nm to less than 85 nm.

10. The catalyst according to claim 9,
wherein the zeolite is one or more selected from the group consisting of MFI-type zeolite, mordenite and β-zeolite.

11. The catalyst according to claim 10,
wherein the MFI-type zeolite is ZSM-5, and a mole ratio of silica to alumina (SiO₂/Al₂O₃) in the zeolite is 600 to 800.

12. The catalyst according to claim 9,
wherein a BET surface area of the adhesive layer is 280 to 350 m²/g.

13. A method of manufacturing the catalyst according to claim 1, comprising:
forming an adhesive layer by coating first slurry containing crystalline silicate and silica sol on a metal carrier containing aluminum; and
forming a catalyst layer by coating second slurry containing a metal catalyst on the adhesive layer.

14. The method according to claim 13,
wherein the first slurry uses zeolite as the crystalline silicate.

15. The method according to claim 13,
wherein a mean diameter of particles of silica contained in the silica sol is 5 to 60 nm, and the silica sol is acidic sol.

16. The method according to claim 13,
wherein a mass ratio of the crystalline silicate to silica contained in the silica sol is 90: 10 to 70: 30 in the first slurry.

17. The method according to claim 13,
wherein a mean diameter of particles made of the crystalline silicate and silica contained in the first slurry is 2 to 6 µm.

18. The method according to claim 15,
wherein pH of the first slurry is 3 to 8.

19. The catalyst according to claim 1,
wherein the metal carrier (10) containing the aluminium has the aluminium atoms at 95 atom% or more.

20. The catalyst according to claim 19,
wherein the metal carrier (10) containing the aluminium has the aluminium atoms at 99 atom% or more.

## Patentansprüche

1. Katalysator, umfassend:
- einen Metallträger (10), enthaltend Aluminium;
- eine adhäsive Schicht (20), die auf dem Metallträger (10) gebildet ist, wobei die adhäsive Schicht (20) kristallines Silikat und Silica enthält; und
- eine Katalysatorschicht (30), die auf der adhäsiven Schicht (20) gebildet ist, wobei der Anteil an Aluminium in dem Metallträger (10) 90 Atom-% oder mehr beträgt.

2. Katalysator nach Anspruch 1, wobei das kristalline Silikat ein Zeolith ist.

3. Katalysator nach Anspruch 2, wobei der Zeolith einer oder oder mehrere, ausgewählt aus der Gruppe bestehend aus MFI-Typ Zeolith, Mordenit und β-Zeolith ist.

4. Katalysator nach Anspruch 3, wobei der MFI-Typ Zeolith ZSM-5 ist.

5. Katalysator nach Anspruch 2, wobei das Molverhältnis von Silica zu Aluminiumoxid (SiO₂/Al₂O₃) in dem Zeolith 50 bis 1.500 ist.

6. Katalysator nach Anspruch 2, wobei das Molverhältnis von Silica zu Aluminiumoxid (SiO₂/Al₂O₃) in dem Zeolith 100 bis 1.500 ist.

7. Katalysator nach Anspruch 1, wobei die Adhäsionsschicht einen BET-Oberflächenbereich von 280 bis 350 m²/g aufweist.

8. Katalysator nach Anspruch 1, wobei die Katalysatorschicht mindestens eines aus Ruthenium und Platin enthält.

9. Katalysator nach Anspruch 1, wobei die Peaks der Mikroporenverteilung der adhäsiven Schicht in einem Bereich von mehr oder gleich 1,7 nm oder weniger als 3,7 nm und in einem Bereich von mehr als oder gleich 3,7 nm oder weniger als 85 nm auftreten.

10. Katalysator nach Anspruch 9, wobei der Zeolith einer oder mehrerer, ausgewählt aus der Gruppe, bestehend aus MFI-Typ Zeolith, Mordenit und β-Zeolith ist.

11. Katalysator nach Anspruch 10, wobei der MFI-Typ Zeolith ZSM-5 ist und das Molverhältnis von Silica zu Aluminiumoxid (SiO₂/Al₂O₃) in dem Zeolith 600 bis 800 beträgt.

12. Katalysator nach Anspruch 9, wobei der BET-Oberflächenbereich der adhäsiven Schicht 280 bis 350 m²/g ist.

13. Verfahren zur Herstellung des Katalysators nach Anspruch 1, umfassend:
- Bilden einer adhäsiven Schicht durch Beschichtung einer ersten Mischung, die kristallines Silikat und Silicasol enthält, auf einen Metallträger, der Aluminium enthält; und
- Bilden einer Katalysatorschicht durch Beschichten einer zweiten Mischung, die einen Metallkatalysator enthält, auf der adhäsiven Schicht.

14. Verfahren nach Anspruch 13, wobei die erste Mischung als kristallines Silikat Zeolith verwendet.

15. Verfahren nach Anspruch 13, wobei ein mittlerer Partikeldurchmesser des Silica, das in dem Silicasol enthalten ist, 5 bis 60 nm ist, und das Silicasol ein saures Sol ist.

16. Verfahren nach Anspruch 13, wobei das Masseverhältnis des kristallinen Silikats zu Silica, das in dem Silicasol enthalten ist, 90:10 bis 70:30 in der ersten Mischung beträgt.

17. Verfahren nach Anspruch 13, wobei der mittlere Durchmesser der Partikel, die aus dem kristallinen Silikat und dem Silica hergestellt sind, das in der ersten Mischung enthalten ist, 2 bis 6 µm beträgt.

18. Verfahren nach Anspruch 15, wobei der pH-Wert der ersten Mischung 3 bis 8 ist.

19. Katalysator nach Anspruch 1, wobei der Metallträger (10), der Aluminium enthält, die Aluminiumatome mit 95 Atom-% oder mehr aufweist.

20. Katalysator nach Anspruch 19, wobei der Metallträger (10), der Aluminium enthält, Aluminiumatome mit 99 Atom% oder mehr aufweist.

## Revendications

1. Catalyseur comprenant :
un support en métal (10) contenant de l'aluminium ;
une couche adhésive (20) formée sur le support en métal (10), la couche adhésive (20) contenant du silicate cristallin et de la silice ; et
une couche de catalyseur (30) formée sur la couche adhésive (20), dans lequel une quantité de l'aluminium dans le support en métal (10) est de 90 % atomique ou plus.

2. Catalyseur selon la revendication 1, dans lequel le silicate cristallin est une zéolite.

3. Catalyseur selon la revendication 2, dans lequel la zéolite est une ou plusieurs choisies dans le groupe consistant en une zéolite de type MFI, la mordénite et la β-zéolite.

4. Catalyseur selon la revendication 3, dans lequel la zéolite de type MFI est ZSM-5.

5. Catalyseur selon la revendication 2, dans lequel un rapport molaire de silice sur alumine (SiO₂/Al₂O₃) dans la zéolite est de 50 à 1 500.

6. Catalyseur selon la revendication 2, dans lequel un rapport molaire de silice sur alumine (SiO₂/Al₂O₃) dans la zéolite est de 100 à 1 500.

7. Catalyseur selon la revendication 1, dans lequel la couche adhésive a une surface spécifique BET de 280 à 350 m²/g.

8. Catalyseur selon la revendication 1, dans lequel la couche de catalyseur contient au moins l'un parmi le ruthénium et le platine.

9. Catalyseur selon la revendication 1, dans lequel des pics d'une distribution de micropore de la couche adhésive existent dans une gamme d'une valeur supérieure ou égale à 1,7 nm à moins de 3,7 nm et dans une gamme d'une valeur supérieure ou égale à 3,7 nm à moins de 85 nm.

10. Catalyseur selon la revendication 9, dans lequel la zéolite est une ou plusieurs choisies dans le groupe consistant en une zéolite de type MFI, la mordénite et la β-zéolite.

11. Catalyseur selon la revendication 10, dans lequel la zéolite de type MFI est ZSM-5, et un rapport molaire de silice sur alumine (SiO₂/Al₂O₃) dans la zéolite est de 600 à 800.

12. Catalyseur selon la revendication 9, dans lequel une surface spécifique BET de la couche adhésive est de 280 à 350 m²/g.

13. Procédé de fabrication du catalyseur selon la revendication 1, comprenant les étapes consistant à :
former une couche adhésive en revêtant une première suspension épaisse contenant un silicate cristallin et un sol de silice sur un support en métal contenant de l'aluminium ; et
former une couche de catalyseur en revêtant une seconde suspension épaisse contenant un catalyseur en métal sur la couche adhésive.

14. Procédé selon la revendication 13, dans lequel la première suspension épaisse utilise de la zéolite en tant que silicate cristallin.

15. Procédé selon la revendication 13, dans lequel un diamètre médian de particules de silice contenus dans le sol de silice est de 5 à 60 nm, et le sol de silice est un sol acide.

16. Procédé selon la revendication 13, dans lequel un rapport en masse du silicate cristallin sur la silice contenus dans un sol de silice est de 90 : 10 à 70 : 30 dans la première suspension épaisse.

17. Procédé selon la revendication 13, dans lequel un diamètre médian de particules constituées du silicate cristallin et de la silice contenus dans la première suspension épaisse est de 2 à 6 µm.

18. Procédé selon la revendication 15, dans lequel le pH de la première suspension épaisse est de 3 à 8.

19. Catalyseur selon la revendication 1, dans lequel le support en métal (10) contenant l'aluminium a 95 % atomique ou plus d'atomes d'aluminium.

20. Catalyseur selon la revendication 19, dans lequel le support en métal (10) contenant l'aluminium a 99 % atomique ou plus d'atomes d'aluminium.
